# FASCICULE DE BREVET EUROPEEN

(11) **EP 2 785 170 B1**
(45) Date de publication et mention de la délivrance du brevet: **06.02.2019**
(21) Numéro de dépôt: 12810325.6
(22) Date de dépôt: 28.11.2012
(51) Int. Cl.: A01G 9/14, A01G 13/02

(54) **BÂCHE COMPOSITE POUR LA PROTECTION DES CULTURES VIVRIERES OU HORTICOLES ET ABRI DE CULTURE COMPORTANT UNE TELLE BÂCHE**
ZUSAMMENGESETZTE ABDECKFOLIE ZUM SCHUTZ VON GARTEN- UND GEMÜSEPFLANZEN SOWIE PFLANZENABDECKUNG MIT EINER ENTSPRECHENDEN FOLIE
COVERING FILM FOR PROTECTING VEGETABLE AND HORTICULTURAL PLANTS AND COVER FOR PLANTS COMPRISING SUCH A FILM

(30) Priorité: 28.11.2011 FR 1103625
(43) Date de publication de la demande: 08.10.2014
(73) Titulaire: Europlastic, 30470 Aimargues (FR)
(72) Inventeur: FARRAS, Serge, F-34250 Palavas Les Flots (FR); CALVET, Christophe, F-30470 Aimargues (FR)
(74) Mandataire: IPAZ
(86) Numéro de dépôt international: PCT/FR2012/052747
(87) Numéro de publication internationale: WO 2013/079872

(56) Documents cités:
- FR-A1- 2 598 881
- FR-A1- 2 633 803
- FR-A1- 2 834 609
- US-A- 2 226 812
- US-A- 3 252 251

## Description

### Domaine technique.

La présente invention est du domaine des matériels utilisés pour la protection contre le gel et les intempéries, des plantes horticoles ou vivrières, telles que des plantes maraîchères, cultivées en plein champ ou sous serre. Plus précisément, la présente invention est relative à une bâche composite de recouvrement et de protection des plantes cultivées, utilisable en tant que couverture d'abri de culture du genre tunnel ou en tant que film de paillage ou de semi-forçage.

### État de la technique antérieure.

La culture des plantes en plein champ fait appel à la formation de planches de culture. Ces planches de culture sont des bandes de terre accueillant des semences ou bien des semis organisés de manière régulière en rangs et colonnes.

Habituellement la récolte des plantes s'effectue quelques semaines ou quelques mois après la mise en terre des semences ou des semis.

Afin de protéger les cultures des intempéries et du gel, les planches de culture, sont recouvertes ou formées dans un abri du genre tunnel ou serre (voir par exemple les documents US-A-3252251 et FR-A1-2 834609). Typiquement, les abris de culture, du genre tunnel, sont formés d'une ossature porteuse et d'un élément de couverture, sous forme de film souple transparent à la lumière, apposé sur l'ossature et plus particulièrement sur les arceaux que cette dernière comporte. Les tunnels de culture présentent des arceaux de faible hauteur, de l'ordre de quelques décimètres et sont prévus pour être facilement démontés. Ces abris de culture forment au-dessus de la ou de chaque planche de culture, une enceinte de protection, dans laquelle est emprisonné un volume d'air, isolé du milieu extérieur, soumis à l'effet de serre.

Habituellement, la bâche de couverture se présente sous la forme d'une bande de matière synthétique, par exemple en polyéthylène.

Afin de maintenir la bande de couverture sur les arceaux d'un tunnel de culture, les deux bordures latérales de cette dernière sont enfouies dans la terre de part et d'autre du tunnel formé.

Elles sont aussi maintenues sur les arceaux par des liens.
De telles dispositions s'opposent à l'envol de la bâche sous l'effet du vent ou à son affaissement sous l'effet notamment du poids de la neige.

### Exposé de l'invention.

### Problème technique.

L'abri formé par les arceaux et la bâche assure une protection efficace des plantes cultivées contre les intempéries et contre le gel en période froide. Cependant en période tempérée ou en période chaude, l'effet de serre et l'étanchéité de l'abri sont à l'origine d'un excès de chaleur, pouvant entraîner un dépérissement rapide des plantes cultivées. Ainsi pendant ces périodes, il convient de limiter la température dans l'abri, et à cette fin, pour ce qui concerne les tunnels de culture, il est connu de former dans leur bâche, le moment venu, des ouvertures d'aération. Actuellement, ces ouvertures d'aération sont formées manuellement par un opérateur à l'aide d'un instrument tranchant. Ces ouvertures d'aération sont également formées par poinçonnage à l'aide d'une panne chauffée à la température de fusion du polyéthylène.

Ces opérations de formation d'ouvertures d'aération sont habituellement répétées plusieurs fois dans la saison et compte tenu du nombre et de la longueur des tunnels sont particulièrement longues et fastidieuses à accomplir.

En période nocturne, lorsque les conditions climatiques saisonnières sont défavorables, il est nécessaire de ralentir la chute des températures dans le tunnel. Ainsi sont utilisées pour la réalisation des bâches des films dits thermiques, aptes à ralentir les échanges de chaleur. Il est apparu cependant utile d'améliorer l'isolation thermique de ces bâches.

### Solution technique.

La présente invention a pour objet d'apporter une solution aux problèmes sus évoqués en proposant une nouvelle bâche composite pour la protection des plantes vivrières ou horticoles conçue apte à répondre successivement à deux objectifs à savoir d'abord, en période froide, la réduction des pertes de chaleur et ensuite, en période tempérée ou en période chaude, la limitation de la température dans l'abri.

À cet effet la bâche selon l'invention, se caractérise par la caractéristiques techniques de la revendication 1.

Ainsi la bâche composite comporte d'origine une zone perforée obturée par la deuxième toile. Une telle disposition, lorsque la bâche constitue la couverture d'un abri et est disposée sur l'ossature en sorte que la première toile soit tournée vers le volume interne de l'abri, permet la formation de coussins d'air chaud entre les deux toiles, ces coussins d'air résultant de la dilation sous l'effet de serre, du volume d'air emprisonné dans l'abri. Ainsi ces coussins d'air se forment naturellement aux heures chaudes du jour et constituent pour les périodes froides, par exemple, les périodes nocturnes, une isolation thermique ralentissant les pertes de chaleurs entre le volume interne de l'abri et le milieu extérieur.

La deuxième toile peut être apposée sur la première toile et maintenue en place sur cette dernière par lestage ou par recouvrement de ses bordures longitudinales par de la terre, mais selon une autre caractéristique de l'invention, la deuxième toile est fixée à la première toile.

Selon une autre caractéristique de l'invention, la deuxième toile est fixée de manière détachable par rapport à la première toile.

De par ces dernières dispositions il devient facile, par retrait de la deuxième toile, de dégager la zone perforée de la première toile, afin que cette zone perforée puisse remplir une fonction d'aération.

Alternativement, selon une autre caractéristique de l'invention, la deuxième toile est fixée de manière permanente à la première toile.

Selon une autre caractéristique de l'invention, la deuxième toile est détachable par parties de la première toile. Une telle disposition permet d'ajuster le degré d'aération et de l'adapter aux conditions climatiques du moment.

Selon une autre caractéristique de l'invention, la zone perforée est formée par une pluralité de perçages traversants régulièrement répartis. Une telle disposition est apte à créer des aérations tout en conservant à la zone perforée une résistance mécanique appropriée.

Selon une autre caractéristique de l'invention, la seconde toile est transparente à la lumière, mais en variante, selon une autre caractéristique de l'invention, la deuxième toile est opaque ou semi opaque à la lumière.

Selon une autre caractéristique de l'invention, la bâche comporte une troisième toile intercalée entre les première et deuxième toiles, ladite troisième toile recouvrante totalement la ou chaque zone perforée et étant fixée à la première toile, ladite troisième toile étant perméable à l'air.

Selon une autre caractéristique de l'invention, la troisième toile est détachable par parties.

La présente invention est relative également à un abri de culture formé d'arceaux et d'une bâche selon l'invention reposant sur les arceaux.

### Bref exposé des figures et des dessins.

D'autres avantages, buts et caractéristiques de l'invention apparaîtront à la lecture de la description d'une forme préférée de réalisation, donnée à titre d'exemple non limitatif, en se référant aux dessins annexés en lesquels :
- la figure 1 est une vue en plan, en écorché, de la bâche composite selon l'invention,
- la figure 2 est une vue en plan en écorché, de la bâche composite selon une seconde forme de réalisation,
- la figure 3 est une vue en coupe d'un tunnel de culture comportant une bâche selon l'invention, dont un des rubans qu'elle comporte est en cours de retrait.

### Meilleure manière de réaliser l'invention.

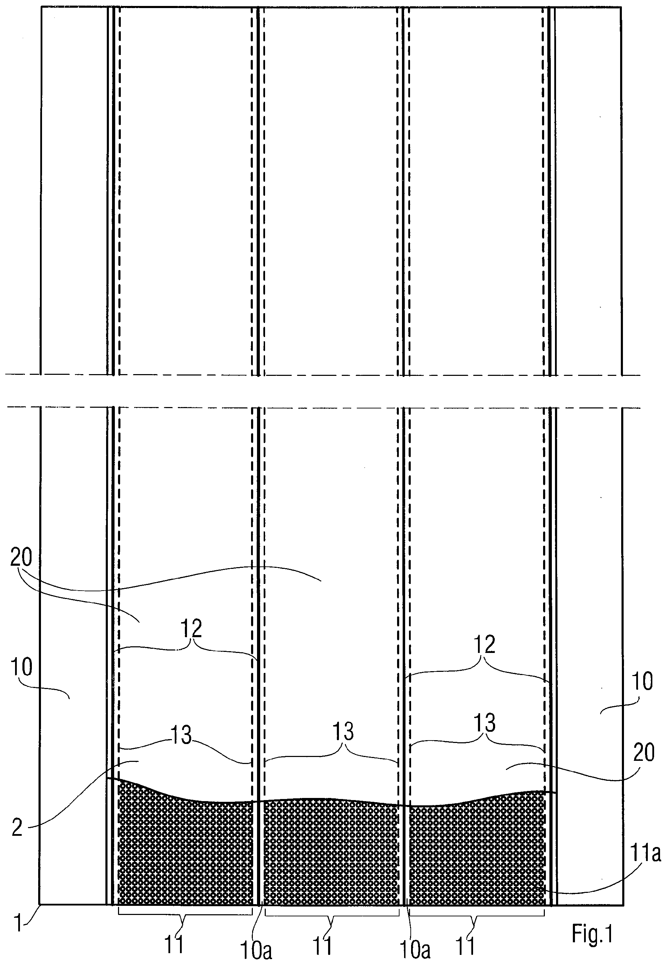

En figure 1 est représentée une bâche selon l'invention. On peut voir que cette bâche comporte une première toile 1 souple, transparente à la lumière réalisée en polyéthylène ou autre matériau adapté, se présentant sous la forme d'une bande rectangulaire possédant un axe longitudinal central. On peut voir également que la bâche selon l'invention comporte une deuxième toile 2 souple, étanche à l'air, apposée sur la première toile et fixée à cette dernière de manière permanente ou préférentiellement de manière détachable, cette seconde toile 2 étant réalisée en polyéthylène et se présentant sous la forme d'une bande rectangulaire possédant un axe longitudinal central. Ces toiles se présentent sous la forme d'un film de faible épaisseur, de préférence non tissé.

Les deux toiles 1 et 2 sont disposées l'une sur l'autre de manière centrée, leurs axes longitudinaux centraux étant en correspondance l'un avec l'autre.

La première toile 1 présente au moins une zone perforée 11, c'est à dire trouée ou perméable à l'air ou à l'eau, recouverte en totalité par la deuxième toile 2, cette zone perforée 11 s'étendant de préférence selon toute la longueur de la première toile. On peut remarquer que la première toile présente deux bordures longitudinales 10 et que la ou chaque zone perforée est formée entre ces bordures longitudinales. On remarque aussi que la première toile 1 présente une largeur supérieure à celle de la deuxième toile 2 et que cette deuxième toile est fixée à ces bordures longitudinales latérales dans des zones non perforées de ces bordures.

Ces bordures longitudinales latérales 10, après mise en place de la bâche sur des arceaux ou directement sur une planche de culture, sont recouvertes de terre afin d'assurer le maintien en place de la bâche. En variante, ces bordures latérales 10 forment chacune un ourlet formant des poches de lestage prévues pour recevoir de la terre.

Avantageusement, sans que cela soit limitatif, cette zone perforée 11 est formée par une pluralité de perforations traversantes 11a, régulièrement réparties. À titre d'exemple non limitatif, le contour de chaque perforation est circulaire et le diamètre de chaque perforation est de l'ordre du centimètre et de préférence de 13 mm afin que les insectes pollinisateurs, comme les abeilles, puissent traverser aisément ces perforations. Il va de soi que toute autre forme pourra être adoptée, ainsi le contour de chaque perforation pourra être polygonal, ovale, elliptique ou autre. A titre d'exemple non limitatif, seront prévues entre 500 et 800 perforations au mètre carré.

Les bordures longitudinales 10 sont de préférence exemptes de perforations traversantes 11a.

Dans la forme préférée de réalisation, la première toile 1 entre les deux bordures latérales 10 comprend plusieurs zones perforées 11, par exemple trois zones perforées à savoir une zone centrale et deux zones latérales de préférence d'égales largeurs. Ces zones perforées 11 seront, soit adjacentes les unes aux autres, soit écartées latéralement les unes des autres et dans ce cas, deux zones perforées consécutives 11 seront séparées l'une de l'autre par une zone 10a, rectangulaire, exempte de perforations.
Ces différentes zones s'étendent sur toute la longueur de la première toile 1 et la zone perforée centrale 11 est disposée de manière symétrique par rapport à l'axe central longitudinal de la première toile.

Toujours selon la zone préférée de réalisation, les zones perforées 11 sont recouvertes par une seule et même deuxième toile 2 fixée de manière détachable à la première toile, mais en variante, la bâche pourra comporter plusieurs deuxièmes toiles en l'espèce trois deuxièmes toiles 2 recouvrant chacune totalement une zone perforée 11 et une seule, chacune de ces deuxièmes toiles 2 étant individuellement fixée de manière détachable à la première toile. Dans ce cas de figure, les deuxièmes toiles 2 seront disposées de manière juxtaposée, c'est-à-dire côte à côte sur la première toile 1. Ces toiles 2 pourront être de différentes matières et/ou différentes couleurs de façon à maîtriser la diffusion de la lumière ou le pouvoir réflecteur de la lumière par la bâche. Par le choix judicieux des couleurs, il sera possible de conférer à la bâche un pouvoir répulsif pour certains insectes ravageurs. De plus les bâches pourront aussi être de différentes opacités.

Selon la forme préférée de réalisation, la ou chaque deuxième toile 2 est fixée à la première toile 1, dans des régions de cette dernière exempte de perforations, au moins deux lignes de fixation, de préférence continues 12, longitudinales, formant chacune une barrière rectiligne étanche à l'air. Ces lignes de fixation, formées par deux cordons rectilignes de préférence continus de soudure ou de colle, sont écartées l'une de l'autre et s'étendant selon la longueur de chaque première 1 et deuxième toile 2. Chaque zone perforée 11 s'étend, de préférence intégralement, entre deux lignes successives de fixation 12.

La ou chaque deuxième toile 2 est fixée par des cordons de soudure ou de colle, de préférence continus, aux bordures 10 de la première toile, dans des régions de ces bordures exemptes de perforations. Dans le cas où la toile 1 présente plusieurs zones perforées 11 adjacentes, des lignes de fixation de préférence continues, sous forme de cordons de soudure ou de colle, seront formées entre ces zones dans des régions de la toile 1 exemptes de perforations. Dans le cas où les zones perforées 11 sont séparées les unes des autres par des zones 10a exemptes de perforations, la toile 2 sera fixée à ces zones 10a toujours par des lignes de fixation de préférence continues sous forme de cordons de soudure ou de colle.

Additionnellement, la ou chaque deuxième toile 2, entre deux lignes successives de fixation 12 et parallèlement à ces dernières, présente deux lignes latérales 13 de prédécoupe écartées l'une de l'autre, s'étendant selon toute la longueur de la deuxième toile et délimitant sur la deuxième toile un ruban 20 détachable recouvrant en totalité la zone perforée 11 correspondante. Grâce à cette disposition, la deuxième toile est détachable par parties et chaque zone perforée 11 peut être individuellement découverte par retrait du ruban 20 correspondant. Ce retrait est opéré par une traction exercée sur ce ruban depuis une extrémité vers l'autre. Les lignes de prédécoupe 13 seront formées par des perforations circulaires traversantes de très faibles dimensions de l'ordre du millimètre, écartées les unes des autres ou bien par des fentes traversantes.

En variante, les lignes de fixation de la seconde bâche à la première seront formées dans des régions perforées de cette dernière, et ces lignes de fixation seront alors formées de cordons de soudures ou de colles se présentant sous la forme de segments s'étendant chacun d'une perforation à l'autre.

Dans l'exemple de réalisation objet de la figure 1, la deuxième toile 2 est fixée à la première toile 1 selon quatre lignes de fixation 12 de préférence continues, écartées les unes des autres, chaque zone perforée 11 étant toujours située entre deux lignes de fixation adjacentes 12. Selon cette forme de réalisation, la deuxième toile 2 présente trois rubans individuellement détachables 20 dont deux recouvrent respectivement les deux zones perforées latérales et dont l'autre recouvre la zone perforée centrale.

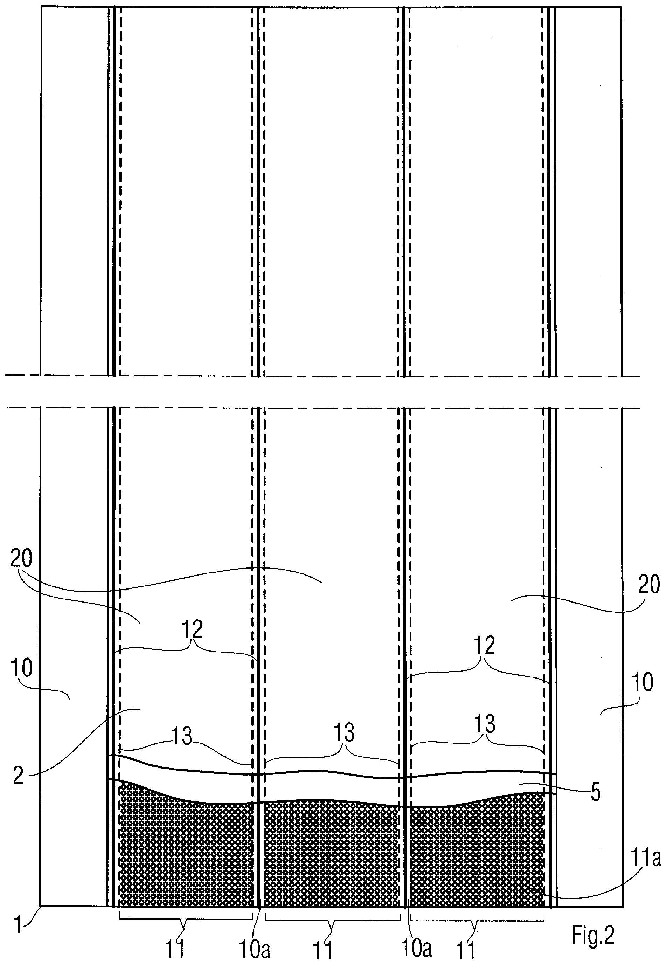

En figure 2 est représentée une bâche selon une seconde forme de réalisation. Une telle bâche comporte une troisième toile 5 intercalée entre les première et deuxième toiles, cette troisième toile recouvrant totalement la ou chaque zone perforée et étant perméable à l'air. Une telle disposition permet de graduer l'effet d'aération. Selon la forme préférée de réalisation, la troisième toile présente une largeur identique à celle de la seconde toile. Elle est avantageusement constituée par un voile non tissé, par un filet anti-insectes ou autre.

Cette troisième toile 5 est fixée à la première toile 1, de préférence par les mêmes lignes de fixation de la deuxième toile 2 à la première toile 1.

Cette troisième toile 5 sera fixée de manière détachable à la première toile 1 et tout comme la seconde toile 2 pourra être détachable par parties. Ainsi la troisième toile 5 comportera, entre deux lignes successives de fixation de préférence continues, deux lignes de prédécoupes, écartées l'une de l'autre et venant encadrer la zone perforée 11 correspondante.

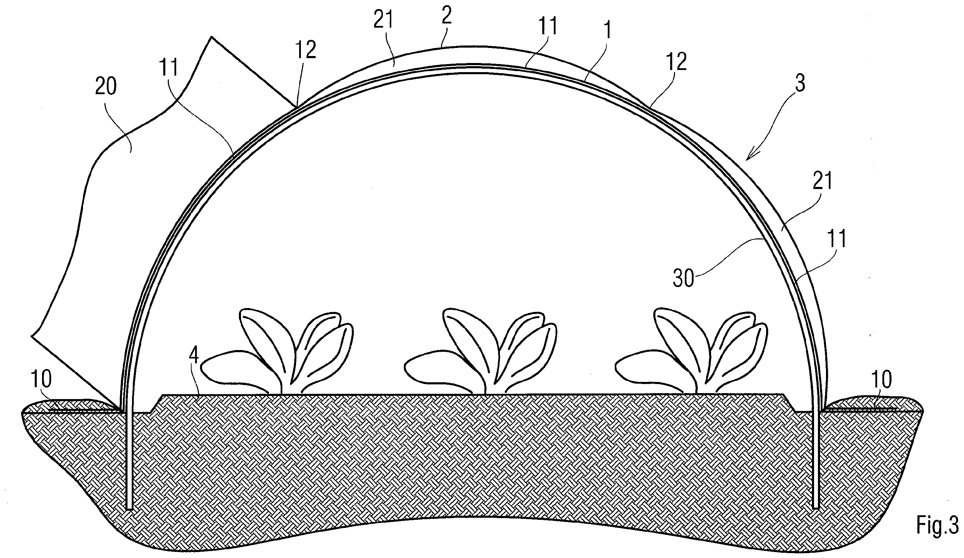

En figure 3 est représenté en coupe, de manière schématique, un abri de culture 3 comportant une bâche selon l'invention. On peut voir que cet abri du genre tunnel s'étend au-dessus d'une planche de culture 4 et présente des arceaux 30 équidistants supportant une bâche conforme à l'invention. On remarque sur cette figure que la première toile 1 est tournée vers le volume interne du tunnel, la deuxième toile 2 étant tournée vers l'extérieur. Cette disposition, outre de permettre le retrait des rubans 20 formés, présente l'avantage d'établir communication entre le volume interne du tunnel et l'intervalle entre les deux toiles 1 et 2. De par cette disposition, le volume d'air emprisonné dans le tunnel pourra, sous l'effet de son élévation de température, se dilater dans l'intervalle entre les deux toiles 1, 2, pour y former des matelas d'air chaud 21 (Fig.3) participant, en période froide à l'isolation thermique du tunnel. Il y a lieu de noter que ces coussins d'air par la chaleur apportée facilitent la croissance des plantes cultivées. On forme ainsi une bâche à double paroi gonflable.

On peut voir également en figure 3 que la zone perforée 11 centrale occupe la zone sommitale du tunnel et que les zones perforées latérales forment les flancs latéraux du tunnel. On peut voir également que les deux bordures latérales longitudinales 10 que présente la première toile sont enfouies dans la terre de part et d'autre du tunnel.

En saison tempérée, pour limiter l'élévation de température dans le tunnel 3, le ruban 20 (Fig.3) que présente l'un des flancs latéraux du tunnel sera d'abord retiré pour dégager la zone perforée 11 correspondante afin de créer une aération. Par la suite, quelques jours après ou quelques semaines après, le ruban 20 de l'autre flanc latéral pourra être retiré afin d'accentuer le degré d'aération et créer les conditions d'une ventilation entre les deux flancs latéraux. Enfin lorsque les températures externes journalières seront trop élevées, le ruban 20 de la zone sommitale pourra être retiré.

Il y a lieu de noter que le retrait du premier ruban n'affecte en rien la formation et/ou le maintien des coussins d'air chaud entre la première toile et les deux autres rubans. La même remarque est à formuler pour ce qui concerne le retrait du deuxième ruban vis-à-vis du troisième coussin d'air.

Il sera aussi possible de retirer d'abord le ruban 20 sommital et ensuite les rubans latéraux l'un après l'autre selon le choix de l'utilisateur.

Un autre intérêt de la bâche conforme à l'invention est de permettre l'utilisation de moyens mécaniques en vue du retrait des rubans. Ces moyens mécaniques pourront être constitués par des enrouleurs motorisés portés par un engin automobile par exemple par un tracteur agricole. Il va de soi que les rubans peuvent aussi être retirés manuellement.

La bâche selon l'invention permet de protéger les cultures du gel, des intempéries, et des insectes nuisibles pour les cultures.

La bâche est utilisable en paillage, au sol.

Il va de soi que la présente invention peut recevoir tous aménagements et variantes sans pour autant sortir du cadre du présent brevet tel que défini par les revendications ci-après.

## Revendications

1. Bâche composite pour la protection des plantes vivrières ou horticoles cultivées en plein champ, comprenant :
- une première toile souple (1) en matière synthétique, transparente à la lumière, présentant au moins une zone (11) perforée,
- au moins une deuxième toile souple (2) en matière synthétique, étanche à l'air maintenue sur la première toile (1), ladite deuxième toile recouvrant de manière étanche la ou chaque zone perforée (11) de la première toile la première toile, **caractérisé en ce que** les première et deuxième toiles sont fixées l'une à l'autre par au moins deux lignes de fixation (12), distantes l'une de l'autre, la ou chaque zone (11) perforée étant située entre deux lignes de fixations (12) de sorte que des coussins d'air chaud puissent se former entre les deux toiles (1, 2) par la dilatation de l'air emprisonné dans l'enceinte de culture formée par la bâche, sous l'effet de serre.

2. Bâche composite selon la revendication 1, **caractérisée en ce que** la deuxième toile (2) est fixée de manière détachable, par parties, à la première toile (1).

3. Bâche composite selon l'une quelconque des revendications précédentes, **caractérisée en ce que** la deuxième toile (2) est transparente à la lumière.

4. Bâche composite selon l'une quelconque des revendications précédentes, **caractérisée en ce que** la deuxième toile (2) est opaque ou semi opaque à la lumière.

5. Bâche composite selon l'une quelconque des revendications précédentes, **caractérisée en ce que** la première toile (1) comprend plusieurs zones perforées (11) adjacentes.

6. Bâche composite selon l'une quelconque des revendications précédentes, **caractérisée en ce que** la première toile (1) comprend plusieurs zones perforées (11) écartées latéralement les unes des autres, deux zones perforées (11) consécutives étant séparées l'une de l'autre par une zone (10a) exempte de perforations.

7. Bâche composite selon la revendication 1, **caractérisée en ce que** la toile (2) est fixée à la toile (1), par des lignes de fixation de préférence continues exemptes de perforations.

8. Bâche composite selon la revendication 1 **caractérisée en ce que** la seconde toile (2) est fixée à la première toile (1) dans des régions perforées de ces dernières.

9. Bâche composite selon l'une quelconque des revendications, 1, 7 ou 8, **caractérisée en ce que** la deuxième toile (2) présente entre deux lignes de fixation (12) adjacentes et parallèlement à ces dernières, deux lignes latérales de prédécoupe (13) écartées l'une de l'autre et délimitant un ruban (20), détachable, recouvrant la zone perforée (11) correspondante.

10. Bâche composite selon la revendication précédente, **caractérisée en ce que** la seconde toile (2) présente plusieurs rubans (20) détachables.

11. Bâche composite selon l'une quelconque des revendications précédentes, **caractérisée en ce que** la deuxième toile (2) est fixée à la première toile selon quatre lignes de fixation (12) de préférence continues écartées l'une de l'autre.

12. Bâche composite selon l'une quelconque des revendications précédentes, **caractérisée en ce que** chaque toile (1, 2) se présente sous la forme d'une bande rectangulaire possédant un axe central longitudinal, que les deux toiles (1, 2) sont disposées l'une sur l'autre de manière centrée, leurs axes longitudinaux centraux étant en correspondance l'un avec l'autre et que la première toile (1) présente une largeur supérieure à celle de la deuxième toile (2) et présente deux bordures longitudinales latérales (10) entre lesquelles est ou sont formées la ou chaque zone perforée (11).

13. Bâche composite selon l'une quelconque des revendications 1 à 9, **caractérisée en ce que** la bâche comporte plusieurs deuxièmes toiles (2) recouvrant chacune totalement une zone perforée (11) et une seule, chacune de ces deuxièmes toiles 2 étant individuellement fixée de manière détachable à la première toile (1), que ces toiles 2 sont disposées côte à côte sur la première toile 1 et que ces toiles 2 sont de différentes matières et/ou de différentes couleurs et/ou de différentes opacités.

14. Bâche composite selon l'une quelconque des revendications précédentes, **caractérisée en ce qu'**elle comporte une troisième toile (5) intercalée entre les première (1) et deuxième (2) toiles, ladite troisième toile (5) recouvrant totalement la ou chaque zone perforée (11) et étant fixée à la première toile.

15. Abri (3) de culture **caractérisé en ce que** l'ossature porteuse est formé d'une série d'arceaux (30) équidistants recouverts par une bâche selon l'une quelconque des revendications précédentes et que la bâche est montée sur les arceaux en sorte que la première toile (1) soit tournée vers le volume interne de l'abri.

## Patentansprüche

1. Verbundabdeckplane zum Schutz von im Freiland angebauten Garten- bzw. Gemüsepflanzen, umfassend:
- eine erste nachgiebige Bahn (1) aus lichtdurchlässigem Kunststoff, die zumindest einen perforierten Bereich (11) aufweist,
- zumindest eine zweite nachgiebige Bahn (2) aus luftdichtem Kunststoff, die auf der ersten Bahn (1) gehalten wird, wobei die zweite Bahn den bzw. jeden perforierten Bereich (11) der ersten Bahn in dichter Weise überdeckt, **dadurch gekennzeichnet, dass** die erste und die zweite Bahn über zumindest zwei voneinander beabstandete Befestigungslinien (12) aneinander befestigt sind, wobei der bzw. jeder perforierte Bereich (11) zwischen zwei Befestigungslinien (12) liegt, so dass sich durch Ausdehnung der in dem von der Abdeckplane gebildeten Anbauraum eingeschlossenen Luft unter Treibhauseffekt zwischen den beiden Bahnen (1, 2) Warmluftpolster bilden können.

2. Verbundabdeckplane nach Anspruch 1, **dadurch gekennzeichnet, dass** die zweite Bahn (2) abschnittsweise in abnehmbarer Weise an der ersten Bahn (1) befestigt ist.

3. Verbundabdeckplane nach einem der vorangehenden Ansprüche, **dadurch gekennzeichnet, dass** die zweite Bahn (2) lichtdurchlässig ist.

4. Verbundabdeckplane nach einem der vorangehenden Ansprüche, **dadurch gekennzeichnet, dass** die zweite Bahn (2) lichtundurchlässig oder halb lichtundurchlässig ist.

5. Verbundabdeckplane nach einem der vorangehenden Ansprüche, **dadurch gekennzeichnet, dass** die erste Bahn (1) mehrere aneinandergrenzende perforierte Bereiche (11) enthält.

6. Verbundabdeckplane nach einem der vorangehenden Ansprüche, **dadurch gekennzeichnet, dass** die erste Bahn (1) mehrere perforierte Bereiche (11) enthält, die seitlich voneinander beabstandet sind, wobei zwei aufeinanderfolgende perforierte Bereiche (11) durch einen perforationsfreien Bereich (10a) voneinander getrennt sind.

7. Verbundabdeckplane nach Anspruch 1, **dadurch gekennzeichnet, dass** die Bahn (2) über vorzugsweise durchgehende Befestigungslinien (12) an der Bahn (1) befestigt ist, die zwischen den perforierten Bereichen (11) in perforationsfreien Bereichen der Bahn (1) gebildet sind.

8. Verbundabdeckplane nach Anspruch 1, **dadurch gekennzeichnet, dass** die zweite Bahn (2) an der ersten Bahn (1) in perforierten Bereichen der beiden befestigt ist.

9. Verbundabdeckplane nach einem der Ansprüche 1, 7 oder 8, **dadurch gekennzeichnet, dass** die zweite Bahn (2) zwischen zwei aneinandergrenzenden Befestigungslinien (12) und parallel dazu verlaufend zwei seitliche vorgeschnittene Linien (13) aufweist, die voneinander beabstandet sind und einen Streifen (20) begrenzen, der abnehmbar ist und den entsprechenden perforierten Bereich (11) überdeckt.

10. Verbundabdeckplane nach dem vorangehenden Anspruch, **dadurch gekennzeichnet, dass** die zweite Bahn (2) mehrere abnehmbare Streifen (20) aufweist.

11. Verbundabdeckplane nach einem der vorangehenden Ansprüche, **dadurch gekennzeichnet, dass** die zweite Bahn (2) entlang von vier Befestigungslinien (12) an der ersten Bahn befestigt ist, die vorzugsweise durchgehend und voneinander beabstandet sind.

12. Verbundabdeckplane nach einem der vorangehenden Ansprüche, **dadurch gekennzeichnet, dass** jede Bahn (1, 2) in Form eines rechteckigen Bandes mit Mittellängsachse vorliegt, dass die beiden Bahnen (1, 2) zentriert aufeinander angeordnet sind, wobei deren Mittellängsachsen übereinstimmen, und dass die erste Bahn (1) eine größere Breite als die zweite Bahn (2) aufweist und zwei seitliche Längsränder (10) hat, zwischen denen der bzw. jeder perforierte Bereich (11) ausgebildet ist.

13. Verbundabdeckplane nach einem der Ansprüche 1 bis 9, **dadurch gekennzeichnet, dass** die Abdeckplane mehrere zweite Bahnen (2) enthält, die jeweils vollständig einen perforierten Bereich (11) und nur einen abdecken, wobei jede dieser zweiten Bahnen 2 einzeln in abnehmbarer Weise auf der ersten Bahn (1) befestigt ist, dass diese Bahnen 2 nebeneinander an der ersten Bahn 1 angeordnet sind und dass diese Bahnen 2 verschiedene Materialien und/oder verschiedene Farben und/oder verschiedene Lichtundurchlässigkeiten haben.

14. Verbundabdeckplane nach einem der vorangehenden Ansprüche, **dadurch gekennzeichnet, dass** sie eine dritte Bahn (5) aufweist, die zwischen der ersten (1) und der zweiten (2) Bahn eingesetzt ist, wobei die dritte Bahn (5) vollständig den bzw. jeden perforierten Bereich (11) überdeckt und dabei an der ersten Bahn befestigt ist.

15. Anbauschutzraum (3), **dadurch gekennzeichnet, dass** das Traggerippe aus einer Reihe von abstandsgleichen Bögen (30) gebildet ist, die von einer Abdeckplane nach einem der vorangehenden Ansprüche überdeckt werden, und dass die Abdeckplane so an den Bögen angebracht ist, dass die erste Bahn (1) dem Inneren des Anbauschutzraums zugewandt ist.

## Claims

1. A composite sheeting for protecting field-cultivated crop or horticultural plants comprising:
- a first flexible, light-transparent sheet (1) of synthetic material exhibiting at least one perforated zone (11),
- at least one second flexible, air-tight sheet (2) of synthetic material held on the first sheet (1), wherein said second sheet tightly covers the or each perforated zone (11) of the first sheet, **characterised in that** the first and second sheets are fastened to one another by at least two fastening lines (12) that are spaced apart from one another, wherein the or each perforated zone (11) is located between two fastening lines (12), such that due to the greenhouse effect, cushions of warm air may be formed between the two sheets (1, 2) by the expansion of the air imprisoned in the cultivation enclosure formed by the sheeting.

2. The composite sheeting according to claim 1, **characterised in that** parts of the second sheet (2) are detachably fixed to the first sheet (1).

3. The composite sheeting according to one of the preceding claims, **characterised in that** the second sheet (2) is transparent to light.

4. The composite sheeting according to one of the preceding claims **characterised in that** the second sheet (2) is opaque or semi-opaque to light.

5. The composite sheeting according to one of the preceding claims, **characterised in that** the first sheet (1) comprises a plurality of adjacent perforated zones (11).

6. The composite sheeting according to one of the preceding claims, **characterised in that** the first sheet (1) comprises a plurality of perforated zones (11) that are laterally spaced apart from one another, wherein two consecutive perforated zones (11) are separated from one another by an unperforated zone (10a).

7. The composite sheeting according to claim 1, **characterised in that** the second sheet (2) is fastened to the first sheet (1) by preferably continuous fastening lines (12) formed between the perforated zones (11) in the unperforated regions of the sheet (1).

8. The composite sheeting according to claim 1, **characterised in that** the second sheet (2) is fastened to the first sheet (1) in the perforated regions of the latter.

9. The composite sheeting according to one of claims 1, 7 or 8, **characterised in that** the second sheet (2) exhibits, between two adjacent fastening lines (12), and parallel to said fastening lines (12), two lateral pre-cut lines (13) spaced apart from one another and defining a detachable ribbon (20) that covers the corresponding perforated zone (11).

10. The composite sheeting according to the preceding claim, **characterised in that** the second sheet (2) exhibits a plurality of detachable ribbons (20).

11. The composite sheeting according to one of the preceding claims, **characterised in that** the second sheet (2) is fastened to the first sheet by four fastening lines (12) that are preferably continuous and spaced apart from one another.

12. The composite sheeting according to one of the preceding claims, **characterised in that** each sheet (1, 2) has the shape of a rectangular strip with a longitudinal central axis, wherein the two sheets (1, 2) are placed centrally one on top of the other with their longitudinal central axes aligned with one another and wherein the first sheet (1) is wider than the second sheet (2) and possesses two lateral longitudinal edges (10) between which is/are formed the or each perforated zone (11).

13. The composite sheeting according to one of claims 1 to 9, **characterised in that** the sheeting comprises a plurality of second sheets (2) that each completely cover a perforated zone (11) and one only, wherein each of these second sheets (2) is individually fastened in a detachable manner to the first sheet (1), wherein these second sheets (2) are placed side by side on the first sheet (1) and these second sheets (2) are made of different materials and/or have different colours and/or have different opacities.

14. The composite sheeting according to one of the preceding claims, **characterised in that** it comprises a third sheet (5) inserted between the first (1) and second (2) sheets, wherein said third sheet (5) completely covers the or each perforated zone (11) and is fastened to the first sheet.

15. A cultivation shelter (3) **characterised in that** the load-bearing framework is formed by a series of equidistant hoops (30) covered by a sheeting according to one of the preceding claims and that the sheeting is mounted on the hoops such that the first sheet (1) faces toward the interior volume of the shelter.
